# NEUE EUROPÄISCHE PATENTSCHRIFT

(11) **EP 0 353 530 B2**
(45) Veröffentlichungstag und Bekanntmachung des Hinweises auf die Entscheidung über den Einspruch: **03.09.2003**
(45) Hinweis auf die Patenterteilung: 19.11.1992
(21) Anmeldenummer: 89113081.7
(22) Anmeldetag: 17.07.1989
(51) Int. Cl.: G07F 7/10

(54) **Verfahren zum Unterscheidbarmachen von elektronischen Schaltungen mit nichtflüchtigem Speicher**
Method for differentiating between electronic circuits with non-volatile memories
Méthode de différenciation de circuits électroniques à mémoires non volatiles

(30) Priorität: 20.07.1988 DE 3824673
(43) Veröffentlichungstag der Anmeldung: 07.02.1990
(73) Patentinhaber: SIEMENS AKTIENGESELLSCHAFT, 80333 München (DE)
(72) Erfinder: Schrenk, Hartmut, Dr. Phys., D-8013 Haar (DE)
(74) Vertreter: Epping Hermann & Fischer

(56) Entgegenhaltungen:
- EP-A- 0 112 461
- EP-A- 0 217 281
- DE-A- 2 738 113
- FR-A- 2 471 003
- FR-A- 2 603 404

## Beschreibung

Die Erfindung betrifft ein Verfahren zum Unterscheidbarmachen von monolithisch integrierten Schaltungen mit mindestens einem nichtflüchtigen Speicher nach dem Oberbegriff von Patentanspruch 1.

Monolithisch integrierte Schaltungen, die einen nichtflüchtigen Speicher enthalten und bei denen eine Unterscheidbarmachung der einzelnen Chips erforderlich ist, sind aus der EP-OS 0 207 320, der EP-OS 0 127 809, der FR-PS 23 11 360, der EP-OS 0 128 362 sowie der DE-PS 26 21 271 bekannt. Es handelt sich hierbei um die integrierten elektronischen Schaltungen sogenannter ChipKarten, oder Chip-Charrying Cards, wie sie in dem Artikel "Intelligenz auf Plastik, Sicherheitssysteme mit Chip-Carrying Cards" von H. Lambert und M. Schmötzer in der Zeitschrift Elektronik vom 3. Februer 1986 beschrieben werden.

In den Standardisierungsgremien, z.B. in der ISO, wird diskutiert, die Chips aus verschiedenen Fertigungslosen durch eine Losnummer zu kennzeichnen. Dadurch wird die Nachbaumöglichkeit durch einen Betrüger zwar auf Chips aus der gleichen Losnummer beschränkt, jedoch nicht ausgeschlossen.

Aufgabe der Erfindung ist die Bereitstellung eines Verfahrens um eine Eingrenzung, Auslieferung oder Sperrung definierter Fertigungsmengen von elektronischen Schaltungen in gleicher Weise, wie es eine fortlanfende Seriennummerierung erlauben würde, ohne daß eine entsprechend aufwendige Dokumentation erforderlich ist, zu erlauben.

Diese Aufgabe wird erfindungsgemäß durch ein Verfahren nach dem kennzeichnenden Teil des Patentanspruches 1 gelöst.

Ein Verfahren gemäß dem Oberbegriff des Patentanspruchs 1 ist aus der DE-OS 27 38 113 zum Zwecke des Unterbindens des Mißbrauchs von Chipkarten bekannt.

Günstige Verfahrensausgestaltungen sind Gegenstand von Unteransprüchen.

Nachstehend wird mit Hilfe der FIG ein möglicher Ablauf eines erfindungsgemäßen Verfahrens beschrieben.

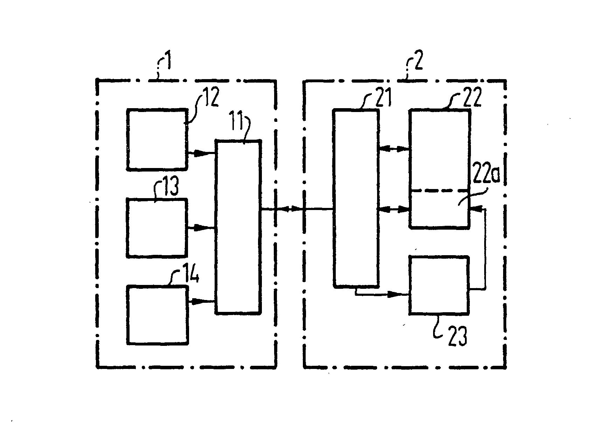

Die Figur zeigt einen Standardtester 1, der unter anderem aus einer Testerlogikschaltung 11, einer Kennzeicheneingabeeinheit 12, einer Testprogrammeingabeeinheit 13 und einer Blockierprogrammeingabeeinheit 14 besteht sowie eine elektronische Schaltung 2, die insbesondere eine Steuerlogikschaltung 21, eine Blockiereinrichtung 23 und einen Kennzeichenspeicher 22a, der insbesondere Teil eines nichtflüchtigen Speichers 22 ist und der zur Aufnahme des spezifischen Kennzeichens vorgesehen ist, enthält.

Beim Funktionstest der elektronischen Schaltung 2 führt der Standardtester 1 erst das übliche, in der Testprogrammeingabeeinheit 13 enthaltene Testprogramm durch. Nach erfolgreichem Abschluß des Testprogrammes schreibt der Standardtester 1 in einen vorgegebenen Adreßbereich des nichtflüchtigen Speichers 22 der elektronischen Schaltung 2, der in der Figur mit 22a als Kennzeichenspeicher dargestellt wird, ein insbesondere aus der Kennzeicheneingabeeinheit 12 entnommenes individuelles Kennzeichen ein. Dann wird durch ein Blockierprogramm, das aus der Blockierprogrammeingabeeinheit 14 entnommen wird, die Blockiereinrichtung 23 in der elektronischen Schaltung 2 aktiviert, und diese Blockiereinrichtung 23 verhindert ein weiteres Verändern der im Kennzeichenspeicher 22a abgelegten Daten.

Als Blockiereinrichtung 23 kann u.a. eine Schaltung vorgesehen sein, die nicht rücksetzbar das maximal erreichbare Potential der Anschlußleitungen der entsprechenden Speicherzellen reduziert und somit ein Verändern des Speicherinhalts im Kennzeichenspeicher 22a unterbindet. Ein Begrenzen der Programmierspannung unter einen zum Programmieren erforderlichen Wert sowie, bei elektrisch löschbaren nichtflüchtigen Speichern ein entsprechendes Begrenzen der Löschspannung kann beispielsweise durch Umschalten zwischen zwei Spannungspegeln oder durch Zuschalten von Serien- oder Parallelwiderständen in einem Spannungsteiler erfolgen. Eine solche Blockiereinrichtung 23 kann unter anderem durch Durchschmelzen einer Schmelzsicherung oder durch Setzen einer monostabilen Kippstufe aktiviert werden.

Im Rahmen der Großfertigung elektronischer Schaltungen ist es nicht praktikabel, als spezifisches Kennzeichen eine fortlaufende Numerierung, wie z.B. eine Seriennummer ohne Überschneidungen bzw. Lücken der Nummernreihe durchzuführen, geschweige denn, die numerierten Schaltungen protokolliert auszuliefern. Ein brauchbares spezifisches Kennzeichen, das erfindungsgemäß als Unterscheidungsmerkmal dienen soll, ist eine aktuelle Zeitangabe. Beim Betrieb mehrerer Tester kann zusätzlich eine testerspezifische Codierung als Bestandteil des spezifischen Kennzeichens vorgesehen sein. Es ist sinnvoll, aber nicht zwingend notwendig, die zum Testzeitpunkt aktuelle Uhrzeit als Kennzeichenbestandteil vorzusehen. Wenn die kleinste im spezifischen Kennzeichen enthaltene Zeiteinheit nicht größer ist als die zum Testen einer Schaltung erforderliche Testzeit, unterscheiden sich die spezifischen Kennzeichen aller Schaltungen, kein Kennzeichen tritt doppelt auf.

Die bei nacheinander gemessenen elektronischen Schaltungen stetig zunehmende Zeiteintragung als spezifisches Kennzeichen erlaubt eine Eingrenzung, Auslieferung oder Sperrung definierter Fertigungsmengen von elektronischen Schaltungen in gleicher Weise, wie es eine fortlaufende Seriennumerierung erlauben würde, ohne daß eine entsprechend aufwendige Dokumentation erforderlich ist.

Ein Vorteil eines spezifischen Kennzeichens, das das Fertigungsdatum enthält, ist die nachträgliche Zuordenbarkeit der einzelnen elektronischen Schaltungen zu einem Fertigungszeitraum. Speziell wenn der Schaltungshersteller diese Schaltung nicht selbst in ein Gehäuse einbaut, ist keine optisch lesbare Prägung vorhanden, aus der beispielsweise bei Vorliegen eventueller Fertigungsfehler Rückschlüsse auf den Fertigungszeitraum gezogen werden könnten.

## Patentansprüche

1. Verfahren zur elektrischen Unterscheidbarmachung von mindestens einen nichtflüchtigen Speicher (22) enthaltenden monolithisch integrierten Schaltungen (2), wobei ein Verändern der einmal in den Speicher (22) eingeschriebenen Daten durch eine Blockiereinrichtung (23) verhindert wird und ein Unterscheidungsmerkmal innerhalb der Testphase des Funktionstests der integrierten Schaltung (2) durch Einschreiben von ein spezifisches Kennzeichen bildenden Daten in den nichtflüchtigen Speicher (22, 22a) eingebracht wird,
**dadurch gekennzeichnet,**
**daß** als spezifisches Kennzeichen bei nacheinander gemessenen integrierten Schaltungen eine stetig zunehmende Zeiteintragung vorgesehen ist.

2. Verfahren nach Anspruch 1,
**dadurch gekennzeichnet,**
**daß** die kleinste eingeschriebene Zeiteinheit des spezifischer Kennzeichens nicht größer ist als die zum Testen einer Schaltung erforderliche Testzeit.

3. Verfahren nach Anspruch 1 oder 2, dadurch gekennzeichet,
daß das spezifische Kennzeichen eine testerspezifische Codierung enthält.

## Claims

1. Method for the electrical differentiation of monolithically integrated circuits (2) including at least one non-volatile memory (22), any changing of the data once written to the memory (22) being prevented by a blocking device (23), and a distinguishing feature being introduced within the test phase of the function test of the integrated circuit (2) by writing data forming a specific identifier to the non-volatile memory (22, 22a), **characterized in that** a continuously incrementing time entry is provided as a specific identifier in the case of integrated circuits measured one after the other.

2. Method according to Claim 1, **characterised in that** the smallest written time unit of the specific identifier is not greater than the test time required for testing a circuit.

3. Method according to Claim 1 or 2, **characterised in that** the specific identifier includes a tester-specific coding.

## Revendications

1. Procédé de différenciation électrique de circuits intégrés monolithiquement (2) comprenant au moins une mémoire non volatile (22), une modification des données une fois enregistrées dans la mémoire (22) étant empêchée par un dispositif de blocage (23), et une caractéristique de différenciation étant insérée, pendant la phase du test de fonctionnement du circuit intégré (2), par enregistrement de données formant un indicatif spécifique, dans la mémoire non volatile (22, 22a),
**caractérisé en ce qu'**il est prévu, comme indicatif spécifique, pour des circuits intégrés mesurés l'un après l'autre, un enregistrement constamment croissant du temps.

2. Procédé suivant la revendication 1, **caractérisé par le fait que** la plus petite unité de temps enregistrée de l'indicatif spécifique n'est pas supérieure à la durée du test nécessaire pour tester un circuit.

3. Procédé suivant la revendication 1 ou 2, **caractérisé par le fait que** l'indicatif comporte un codage spécifique à l'appareil de test.
